# EUROPEAN PATENT SPECIFICATION

(11) **EP 2 906 648 B1**
(45) Date of publication and mention of the grant of the patent: **17.06.2020**
(21) Application number: 13783695.3
(22) Date of filing: 09.10.2013
(51) Int. Cl.: C09D 183/07

(54) **RELEASING LAMINATE AND PRODUCTION METHOD THEREOF**
ABLÖSELAMINAT UND HERSTELLUNGSVERFAHREN DAFÜR
STRATIFIÉ PELLICULABLE ET SON PROCÉDÉ DE PRODUCTION

(30) Priority: 09.10.2012 JP 2012224504
(43) Date of publication of application: 19.08.2015
(73) Proprietor: Dow Toray Co., Ltd., Tokyo (JP)
(72) Inventor: ENDO, Syuji, Chiba-shi Chiba 264-0007 (JP); YAMADA, Takateru, Ichihara-shi Chiba 290-0022 (JP)
(74) Representative: Murgitroyd & Company
(86) International application number: PCT/JP2013/078113
(87) International publication number: WO 2014/058075

(56) References cited:
- US-A1- 2012 082 816

## Description

### TECHNICAL FIELD

The present invention relates to a releasing laminate and a production method for the releasing laminate. The present invention provides a releasing laminate in which coatability of an aqueous adhesive on a silicone release layer is improved, and the releasing laminate is formed by forming a thin and uniform adhesive layer.

### BACKGROUND ART

The method of forming a cured layer of an organopolysiloxane composition on a surface of a substrate such as various types of papers, laminated papers, synthetic films, metal foils, or the like to impart a release property to an adhesive substance is well known. In this case, an addition reaction type organopolysiloxane composition is widely used for performing an addition reaction between an organohydrogenpolysiloxane and an organopolysiloxane having unsaturated hydrocarbon groups in the presence of a hydrosilylation reaction catalyst as a method for forming the releasing cured film (e.g. Patent Document 1).

On the other hand, upon consideration of the adhesive substance, emulsion-type aqueous adhesive compositions are becoming prevalent in recent years due to factors such as atmospheric contamination by solvent volatilization during factory production, improvement of the work environment, danger of fire, sick building syndrome, and the like. Particularly, a synthetic resin emulsion adhesive produced by emulsion polymerization of a synthetic resin monomer in water does not require an organic solvent, and such a synthetic resin emulsion adhesive has the advantages of being able to form a thin adhesive layer and being capable of high speed coating. Acrylic resin emulsion adhesives are widely used in this technical field particularly with the goal of obtaining a high performance adhesive tape at low cost.

However, if a conventional releasing cured film-forming organopolysiloxane composition is used to form a silicone release layer on a surface of a substrate, when the aqueous adhesive is applied onto the obtained silicone release layer, the aqueous adhesive does not wet and spread uniformly, so that a non-uniform coating surface is sometimes formed. This non-uniformity is particularly severe if the aqueous adhesive is applied thinly and at high speed. Thus, the thin, fast, and uniform coating of the aqueous adhesive on the silicone release layer is difficult, and there have been problems with respect to processability and improvement of wettability of the aqueous adhesive.

Conversely, the removal of low boiling point components such as cyclic siloxanes from the raw material is known with objects such as the improvement of transition ability and contact faults of the silicone component in a releasing silicone composition (e.g., see Patent Document 2 or Patent Document 3).

However, although these releasing silicone compositions indicate problems relating to transition ability of the silicon component or the like and indicate a means for solution of such problems, there is neither mention nor suggestion concerning wettability and coatability of an emulsion-type or a similar aqueous adhesive. In particular, there is neither specific mention nor suggestion concerning a releasing laminate comprising a uniform adhesive layer, formed by coating the aqueous adhesive composition such that a thickness upon coating becomes less than or equal to 200 µm (wet thickness), on a silicone release layer disposed on a substrate.

### PRIOR ART DOCUMENTS

### Patent Documents

Patent Document 1: Japanese Unexamined Patent Application Publication No. S47-32072A
Patent Document 2: Japanese Unexamined Patent Application Publication No. H03-041153A
Patent Document 3: Japanese Unexamined Patent Application Publication (Translation of PCT Application) No. H04-311764

### SUMMARY OF INVENTION

### Technical Problem

An object of the present invention is to provide a laminate comprising: a substrate; a silicone release layer; and an adhesive layer comprising an aqueous adhesive, in which the adhesive layer is formed thinly and uniformly on the silicone release layer, and the releasing laminate has an excellent easy releasing property, and a method for producing the same. Solution To Problem

As a result of dedicated investigations, the inventors of the present invention achieved the present invention by discovery of the ability to solve the aforementioned problem by forming a silicone release layer upon a substrate by use of a hydrosilylation reaction-releasing cured film-forming organopolysiloxane comprising (a) an organopolysiloxane having at least two silicon-bonded alkenyl groups in the molecule and having a tetra(4)mer to eicosa(20)mer cyclic siloxane content of less than or equal to 1,000 ppm in terms of mass units, and then forming an adhesive layer by coating an aqueous adhesive composition on the same silicone release layer.

Moreover, the inventors of the present invention achieved the present invention by using as the aforementioned component (a) an organopolysiloxane having a tetra(4)mer to deca(10)mer cyclic siloxane content of less than or equal to 20 ppm in terms of mass units (and further preferably less than or equal to 10 ppm in terms of mass units), and having a tetra(4)mer to eicosa(20)mer cyclic siloxane content of less than or equal to 500 ppm in terms of mass units (and further preferably less than or equal to 200 ppm in terms of mass units), to form the silicone release layer on the substrate, and then forming the adhesive layer by coating on the same silicone release layer an emulsion type aqueous adhesive composition (e.g. acrylic resin emulsion adhesive or the like) as the aqueous adhesive composition such that the thickness upon coating becomes less than or equal to 100 µm, so that the aforementioned problem could be better solved.

Specifically, the objects of the present invention are achieved by:
"[1] A releasing laminate according to claim 1
The substrate of the releasing laminate may be a sheet-form substrate;
A method for producing the releasing laminate is defined in claim 3.

### ADVANTAGES AND DESCRIPTION OF EMBODIMENTS

The disclosed releasing laminate comprises a substrate but no particular limitation is placed on the morphology of the substrate, although a sheet-like (film-like) or tape-like substrate is preferred. No particular limitation is placed on the type of substrate. The substrate is exemplified by paper board, cardboard, clay-coated paper, polyolefin laminate paper, and particularly polyethylene laminate paper, synthetic resin film, natural fiber cloth, synthetic fiber cloth, artificial leather cloth, and metal foil. In particular, synthetic resin film is preferred as the substrate. The synthetic resin constructing the substrate is exemplified by polyimide, polyethylene, polypropylene, polystyrene, polyvinyl chloride, polycarbonate, polyethylene terephthalate, and nylon. Particularly, when heat resistance is required, heat resistant synthetic resin film such as polyimide, polyetheretherketone (PEEK), polyethylene naphthalate (PEN), liquid crystal polyarylate, polyamideimide (PAI), polyethersulfone (PES), is preferable. Moreover, a suitable synthetic resin film is formed as a composite of such resins. Further, the silicone release layer of the present invention is substantially transparent, and thus depending on the application of the releasing laminate, a transparent substrate (synthetic resin film) may also be used.

### [Silicone Release Layer (A)]

The silicone release layer is formed on the substrate, and it is possible to form a thin and uniform adhesive layer on the silicone release layer.

Referring to features of claim 3, component (a) is an organopolysiloxane having at least two silicon-bonded alkenyl groups in the molecule and a tetra(4)mer to deca(10)mer cyclic siloxane content less than or equal to 20 ppm in terms of mass units and has a tetra(4)mer to eicosa(20)mer cyclic siloxane content that is less than or equal to 500 ppm in terms of mass units. The alkenyl group undergoes a hydrosilylation reaction with the silicon-bonded hydrogen atoms in the organohydrogenpolysiloxane (namely, component (b)), that is, the alkenyl group undergoes an addition reaction so that the composition crosslinks and cures. It is thus necessary that the component (a) have at least two silicon-bonded alkenyl groups in the molecule. This alkenyl group is exemplified by a vinyl group, allyl group, butenyl group, 5-hexenyl group, octenyl group, and a decenyl group. Among such alkenyl groups, the vinyl group, and 5-hexenyl group are preferred from the standpoints of reactivity and ease of production.

The tetra(4)mer to eicosa(20)mer cyclic siloxane content in the component (a) must be less than or equal to 500 ppm in terms of mass units. However, this tetra(4)mer to eicosa(20)mer cyclic siloxane content is preferably less than or equal to 200 ppm in terms of mass units, and most preferably is less than or equal to 150 ppm in terms of mass units. When the tetra(4)mer to eicosa(20)mer cyclic siloxane content exceeds the aforementioned upper limit, the aqueous adhesive does not uniformly wet and spread during coating on the obtained silicone release layer, and this may result in the adhesive splitting open on the silicone release layer so that the silicone release layer is exposed, and it is then not possible to achieve the goal of the invention of the present application of forming a thin and uniform adhesive layer comprising aqueous adhesive on the silicone release layer. Furthermore, in order to more favorably achieve the object of the present invention, the tetra(4)mer to deca(10)mer cyclic siloxane content in the component (a) is further preferably less than or equal to 10 ppm in terms of mass units, and most preferably is less than or equal to 7.5 ppm in terms of mass units.

From the standpoint of curability and cured film characteristics, the alkenyl group content in the present component is preferably in the range of from 0.05 to 10.0 mol% of the total of all organic groups bonded to silicon atoms, and further preferably is in the range of from 0.1 to 5.0 mol%.

The non-alkenyl group organic groups bonded to the silicon atoms are exemplified by monovalent hydrocarbon groups such as alkyl groups such as a methyl group, ethyl group, propyl group, butyl group, pentyl group, hexyl group,; aryl groups such as a phenyl group, tolyl group, xylyl group,; and aralkyl groups such as a benzyl group, or phenethyl group. Among these non-alkenyl group organic groups, alkenyl groups, and phenyl group are preferred, and the methyl group is particularly preferred. The bonding sites of such an alkenyl group may be only at the end of the molecular chain of the diorganopolysiloxane, only the sidechains of the diorganopolysiloxane, or may be at both such sites.

The component (a) preferably has a viscosity of greater than or equal to 25 mPa·s at 25°C. The component (a) at 25°C is preferably in a liquid or gum-like state. Herein the "gum-like" means a semi-solid highly polymerized silicone polymer that has plasticity and normally a viscosity of greater than or equal to 10,000,000 mPa·s, wherein the viscosity is unmeasurable with rotatory viscometer etc. In particular, in order to use the component (a) as a solvent-free releasing cured film-forming organopolysiloxane composition, from the standpoints of cured film characteristics and suitability for high speed coating application on a sheet-form substrate, viscosity of this component (a) at 25°C is in the range of from 25 to 2,000 mP·s, and preferably is in the range of from 45 to 1,000 mP·s. Moreover, the component (a) may be a mixture of two or more such components having different viscosity values. Furthermore, even when content (a) is a mixture of gum-like state organopolysiloxane and liquid organopolysiloxane, the preferred range of entire viscosity in the mixture is the same as described in above.

Representative examples of this component (a) are straight diorganopolysiloxanes indicated by the following average structural formula (2).

R^{c}R₂SiO(RR^{c}SiO_{2/2})ₘ₁(R₂SiO_{2/2})ₘ₂SiR₂R^{c} (2)

{In the formula, R is an alkyl group having from 1 to 8 carbons or a phenyl group (where the alkyl groups are at least 50 mol% in the molecule); R^{c} is an alkenyl group having from 2 to 8 carbons; m1 is a number greater than or equal to 0; m2 is a number greater than or equal to 1; m1 + m2 preferably is a number such that viscosity at 25°C of the present component is from 25 to 2,000 mPa·s.} In the formula, the alkyl group and alkenyl group are exemplified by the previously mentioned examples, and are preferably the previously mentioned examples. The value of m1/(m1 + m2) is preferably a number such that the number of R^{c} groups in the molecule relative to the total of R and R^{c} becomes from 0.2 to 10 mol%, and further preferably is a number such that the number of R^{c} groups within the molecule to the total of R and R^{c} becomes from 0.5 to 5.0 mol%.

Specific examples of the component (a) are listed below.
ViMe₂SiO(Me₂SiO_{2/2})ₘ₂SiMe₂Vi
ViMePhSiO(Me₂SiO_{2/2})ₘ₂SiPhMeVi
ViMe₂SiO(MeViSiO_{2/2})ₘ₁(Me₂SiO_{2/2})ₘ₂SiMe₂Vi
HeMe₂SiO(MeViSiO_{2/2})ₘ₁(Me₂SiO_{2/2})ₘ₂SiMe₂He
ViMe₂SiO(MeHeSiO_{2/2})ₘ₁(Me₂SiO_{2/2})ₘ₂SiMe₂Vi
Me₃SiO(MeViSiO_{2/2})ₘ₁(Me₂SiO_{2/2})ₘ₂SiMe₃
ViMe₂SiO(MeViSiO_{2/2})ₘ₁(MePhSiO_{2/2})ₘ₂SiMe₂Vi
Here, Me indicates the methyl group, Vi indicates the vinyl group, He indicates the hexenyl group, and Ph indicates the phenyl group.

The component (b) is an organohydrogenpolysiloxane having at least two silicon atom-bonded hydrogen atoms within 1 molecule, and this component (b) functions as a crosslinking agent for the component (a). Thus, the component (b) must have at least two silicon-bonded hydrogen atoms in the molecule, and preferably has at least 3 silicon-bonded hydrogen atoms in the molecule.

The bonding sites of the silicon-bonded hydrogen atoms are not particularly limited, and examples thereof include molecular terminals, and/or sidechains. The content of the silicon-bonded hydrogen atoms is preferably from 0.1 to 5% by mass and more preferably from 0.5 to 2.5% by mass.

The organic group bonded to the silicon atom is an alkyl group having from 1 to 8 carbons or a phenyl group. The alkyl group is exemplified by a methyl group, ethyl group, propyl group, butyl group, and an octyl group. However, the content of the alkyl groups having from 1 to 8 carbons within the total organic groups in the molecule is preferably greater than or equal to 50 mol%. Of these alkyl groups, from the perspectives of cured layer characteristics and ease of manufacture, methyl groups are preferable. The component (B) may have a straight, branched, networked, or cyclic molecular structure.

A viscosity of the component (b) at 25°C is generally from 1 to 1,000 mPa·s, and preferably is from 5 to 500 mPa·s. When this viscosity of the component (b) is less than 1 mPa·s at 25°C, the component (b) readily volatilizes from the organopolysiloxane composition. The curing time becomes prolonged when this viscosity exceeds 1,000 mPa·s.

Specific examples of this type of component (b) include methylhydrogenpolysiloxanes capped at both molecular terminals with trimethylsiloxy groups, dimethylsiloxane-methylhydrogensiloxane copolymers capped at both molecular terminals with trimethylsiloxy groups, dimethylsiloxane-methylhydrogensiloxane copolymers capped at both molecular terminals with dimethylhydrogensiloxy groups, cyclic methylhydrogenpolysiloxane, cyclic methylhydrogensiloxane-dimethylsiloxane copolymers, tris(dimethylhydrogensiloxy) methylsilanes, and tetra(dimethylhydrogensiloxy)silanes, where part of the methyl groups within the aforementioned polysiloxane or copolymer is replaced by an alkyl group having from 2 to 8 carbons or a phenyl group.

A compounded amount of the component (a) to the component (b) is preferably such that a molar ratio of the amount of silicon-bonded hydrogen atoms in the component (b) to the amount of alkenyl groups in the component (a) is from 0.8:1 to 5:1, and this molar ratio is preferably from 0.9:1 to 3:1. The curability readily declines when this molar ratio becomes lower than the aforementioned lower limit. When this molar ratio is greater than the aforementioned upper limit, the release resistance value increases, and it becomes difficult to obtain a practical releasing property.

Component (c) is a catalyst for promotion of the hydrosilylation reaction between the silicon-bonded alkenyl groups within the component (a) and the silicon-bonded hydrogen atoms within the component (b). The component (a) and component (b) are crosslinked by the hydrosilylation reaction.

No particular limitation is placed on this component (c) as long as the component (c) is a hydrosilylation catalyst such as a group 8 precious metal catalyst that promotes the hydrosilylation reaction. From the standpoint of ability to promote the hydrosilylation reaction, a platinum-based catalyst is preferred; and platinum alkenyl siloxane complexes such as chloroplatinic acid, complexes between platinum and vinyl siloxanes, and complexes between platinum and olefins are preferred. Complexes between chloroplatinic acid and divinyltetramethyl disiloxane, complexes between chloroplatinic acid and tetramethyltetravinylcyclotetrasiloxane, complexes between platinum and divinyltetramethyl disiloxane, platinum tetramethyl tetravinylcyclotetrasiloxane complexes, are particularly preferred.

The compounded amount of the component (c), that is, the so-called catalytic quantity, relative to the total mass of the aforementioned releasing cured film-forming organopolysiloxane composition, is from 1 to 1,000 ppm in terms of mass units based on the platinum metal content, and preferably is in the range of from 5 to 500 ppm in terms of mass units.

In addition to the aforementioned necessary ingredients, the aforementioned releasing cured film-forming organopolysiloxane composition preferably contains (d) a hydrosilylation reaction suppressing agent for control of gelling and curing at temperatures below ambient temperature, for suppression of curing and improvement of storage stability, and for hot curability. Examples of the hydrosilylation reaction suppressing agent include acetylene-based compounds, ene-yne compounds, organic nitrogen compounds, organic phosphorus compounds, and oxime compounds. Specific examples thereof include alkynyl alcohols such as 3-methyl-1-butyne-3-ol, 3,5-dimethyl-1-hexyne-3-ol, 3-methyl-1-pentene-3-ol, phenylbutynol, 1-ethynyl-1-cyclohexanol,; ene-yne compounds such as 3-methyl-3-pentene-1-yne, 3,5-dimethyl-1-hexyne-3-yne,; benzotriazole, and methylvinylcyclosiloxane. A compounded amount of the hydrosilylation reaction suppressing agent, per 100 parts by mass of the component (a), is generally in a range of from 0.001 to 5 parts by mass, and preferably is in the range of from 0.01 to 2 parts by mass. However, the compounded amount of the hydrosilylation reaction suppressing agent may be selected appropriately depending on the type of the present component, performance and content of the hydrosilylation reaction catalyst, the amount of alkenyl groups in the component (a), and the amount of silicon-bonded hydrogen atoms in the component (b).

The aforementioned releasing cured film-forming organopolysiloxane composition is composed of the components (a) to (c) and the optional component (d), and this releasing cured film-forming organopolysiloxane composition may be suitably used particularly as a solvent-free type curable organopolysiloxane composition. On the other hand, an alkenyl group-containing organopolysiloxane resin may be further blended in the aforementioned composition in order to lower releasing force of the silicone release layer relative to the adhesive substance. Moreover, a thickening agent, such as a silica fine powder or the like, may be further blended in order to increase the viscosity of the coating liquid. When the aforementioned composition is used as a solvent-free composition, from the standpoint of the coatability of the aforementioned composition on a sheet-form substrate, viscosity of the entire composition at 25°C is preferably in the range of from 100 to 100,000 mP·s, and the viscosity of the entire composition is further preferably from 500 to 50,000 mP·s.

On the other hand, the composition of the present invention may be used as a solvent type curable organopolysiloxane composition having the below described organic solvent as a necessary ingredient. In this case, the viscosity of the entire composition at 25°C is preferably in the range of from 100 to 100,000 mP·s, and the viscosity of the total composition is further preferably in the range of from 100 to 50,000 mP·s.

On the other hand, with the object of thin coating or the like, the composition of the present invention may be used by dispersion in a known organic solvent. The organic solvent is exemplified by aromatic hydrocarbon solvents such as toluene, xylene,; aliphatic hydrocarbon solvents such as hexane, octane, isoparaffin,; ketone-based solvents such as acetone, methyl ethyl ketone, methyl isobutyl ketone,; ester-based solvents such as ethyl acetate, isobutyl acetate,; ether-based solvents such as diisopropyl ether, 1,4-dioxane,; and halogenated hydrocarbons such as trichloroethylene, perchloroethylene, trifluoromethylbenzene, 1,3-bis(trifluoromethyl)benzene, or methylpentafluorobenzene. If the coating is applied thinly to a sheet-form substrate that has low heat resistance (e.g. a polyolefin), then an ether-based solvent is preferably used from the standpoint of curability and the problem of swelling. Moreover, in order to achieve the object of the present invention, a tetra(4)mer to eicosa(20)mer cyclic siloxane-containing siloxane-based solvent may be not used.

Optional ingredients other than the aforementioned various ingredients may be added to the aforementioned releasing cured film-forming organopolysiloxane composition. Such optional ingredients may include known additives such as adhesion promotors composed of alkoxysilane compounds such as 3-glycidoxypropyltrimethoxysilane, 3-methacryloxypropyltrimethoxysilane,; phenol type, quinone type, amine type, phosphorous type, phosphite type, sulfur type, thioether type, or similar antioxidants; triazole type, benzophenone type, or similar photostabilizers; phosphate ester type, halogen type, phosphorous type, antimony type, or similar fire retardants; cationic type surfactants, anionic type surfactants, non-ionic type surfactants, as one or more types of surfactant; heat resistance agents, dyes, pigments, mist suppression agents, anti-static agents,.

The curable organopolysiloxane composition according to the present invention is composed of the aforementioned components (a) to (c) and the optional component (d). By addition reaction under room temperature or at from 50 to 200°C conditions as described below, the curable organopolysiloxane composition according to the present invention forms a cured film having excellent release characteristics. However, from the standpoint of physical properties and release property of the obtained cured film, the curable organopolysiloxane composition according to the present invention is preferably further cured by ultraviolet irradiation.

Thus, in order to impart ultraviolet curability to the curable organopolysiloxane composition according to the present invention, a photoinitiator is preferably blended in the curable organopolysiloxane composition. This component will be explained below.

The photoinitiator imparts ultraviolet curability to the curable organopolysiloxane composition of the present invention. The combined use of ultraviolet curing and curing due to the addition reaction is advantageous due to the ability to further improve the silicone transition ability of the composition of the present invention. This component may be a previously known compound for generation of radicals due to irradiation by ultraviolet light. The photoinitiator may be selected appropriately from among organic peroxides, carbonyl compounds, organic sulfur compounds, and azo compounds, , for example. Specific examples include acetophenone, propiophenone, benzophenone, xanthol, fluorein, benzaldehyde, anthraquinone, triphenylamine, 4-methylacetophenone, 3-pentylacetophenone, 4-methoxyacetophenone, 3-bromoacetophenone, 4-allylacetophenone, p-diacetylbenzene, 3-methoxybenzophenone, 4-methylbenzophenone, 4-chlorobenzophenone, 4,4-dimethoxybenzophenone, 4-chloro-4-benzylbenzophenone, 3-chloroxyanthone, 3,9-dichloroxyanthone, 3-chloro-8-nonlyyxanthone, benzoin, benzoin methyl ether, benzoin butyl ether, bis(4-dimethylaminophenyl)-ketone, benzyl methoxy ketal, 2-chlorothioxyanthone, diethylacetophenone, 1-hydroxycyclohexylphenylketone, 2-methyl[4-(methylthio)phenyl]2-morpholino-1-propanone, 2,2-dimethoxy-2-phenylacetophenone, diethoxyacetophenone,. If the composition of the present invention is an ultraviolet radiation curable composition, then the photoinitiator is exemplified preferably by benzophenone, 4-methoxyacetophenone, 4-methylbenzophenone, diethoxyacetophenone, or 1-hydroxycyclohexylphenylketone, and further preferably by diethoxyacetophenone and 1-hydroxycyclohexylphenylketone.

The aforementioned photoinitiator may be used as one type or may be used as a combination of two or more types. Although no particular limitation is placed on the compounded amount of the photoinitiator, the concentration relative to 100 parts by mass of the component (a) is in the range of from 0.01 to 10 parts by mass, and preferably is in the range of from 0.01 to 2.5 parts by mass. When the compounded amount of the photoinitiator is within aforementioned range, the releasing film obtained by curing the composition of the present invention has improved silicone transition ability and excellent physical properties such as strength.

The aforementioned releasing cured film-forming organopolysiloxane composition may be produced by uniformly mixing the aforementioned components (a) to (c), preferably the components (a) to (d), or such components and other optional components. Although no particular limitation is placed on the order of blended of each of the components, if the releasing cured film-forming organopolysiloxane composition is not used immediately after blending, a mixture of the components (a), (c), and (d) and the component (b) are preferably stored separately and then are mixed together immediately prior to use.

When the aforementioned releasing cured film-forming organopolysiloxane composition is coated uniformly on the surface of the substrate and is heated under sufficient conditions for crosslinking due to the hydrosilylation reaction between the components (a) and (b), a silicone release layer is formed so that the surface of such a substrate has excellent slipping ability, has suitable release resistance relative to the adhesive substance, has excellent wettability for the aqueous adhesive, and is capable of forming a thin and uniform adhesive layer.

The suitable curing temperature of the aforementioned releasing cured film-forming organopolysiloxane composition on the substrate is generally from 50 to 200°C, although the curing temperature may be greater than or equal to 200°C if heat resistance of the substrate is good. The method of heating is not particularly limited, and examples thereof include heating in a hot-air circulation oven, passing through a long heating furnace, and heat ray radiation by an infrared lamp or halogen lamp. The releasing cured film-forming organopolysiloxane composition may also be cured using a combination of heating and UV light irradiation. When the component (c) is a platinum alkenylsiloxane complex catalyst, even when the compounded amount of the component (c) relative to the total amount of composition is from 50 to 200 ppm in terms of mass units based on the platinum metal, it is possible to readily obtain a silicone release layer that has excellent release property relative to the adhesive substance and has excellent adhesion to the substrate by curing for a short time interval of from 1 to 40 seconds at a temperature of from 100 to 150°C.

[Adhesive layer (B)] The second characteristic of the releasing laminate of the present invention is that an adhesive layer composed of the aqueous adhesive composition is formed on the silicone release layer formed on the substrate. The aforementioned silicone release layer has improved wettability for the aqueous adhesive composition. The aqueous adhesive composition wets and spreads uniformly during coating and is able to form a thin and uniform adhesive layer on the silicone release layer.

The aqueous adhesive composition is a dispersion of an adhesive substance in an aqueous medium. After application in the water-containing wet state, the adhesive layer may be formed on the coated surface by natural evaporation or heating-drying to remove moisture. The aqueous adhesive compositions capable of use in the present invention may be any conventionally utilized aqueous adhesive composition. However, an adhesive substance is an adhesion-imparting resin, and an emulsion type aqueous adhesive composition is preferably used that is formed as an aqueous dispersion of an adhesion-imparting resin. This aqueous emulsion composition of the adhesion-imparting resin is exemplified by acrylic resin emulsions, urethane resin emulsions, natural rubber latex type emulsions, or synthetic rubber latex type emulsions such as those of styrene-butadiene copolymer (SBR) latex, acrylonitrile-butadiene copolymer latex, methyl methacrylate-butadiene copolymer latex, polychloroprene latex,. The use of acrylic resin emulsion is particularly preferred.

The acrylic resin emulsion is an aqueous emulsion composition of an adhesion-imparting resin synthesized by emulsion polymerization, in the presence of a surfactant, of acrylic acid esters (e.g. alkyl acrylate), and as may be required, a methacrylate ester or other unsaturated group-containing monomer. The aforementioned monomers may include monomers having a functional group such as a hydroxyl group, carboxyl group, amide group, glycidyl group, nitrile group,.

The aforementioned aqueous adhesive composition, as may be desired, may be used with a curing agent. The curing agent is exemplified by isocyanate compounds such as hexamethylene diisocyanate (HDI), diphenylmethane diisocyanate (MDI),; and aqueous oxazoline type crosslinking agents, aqueous (poly)carbodiimide type crosslinking agents, aqueous epoxy resin type crosslinking agents,.

In the same manner, various types of additives may be blended in the aforementioned aqueous adhesive composition. Specific examples of such additives include thickening agents, fillers, anti-aging agents, antioxidants, pigments (dyes), plasticizers, UV absorbers, flame retardants, surfactants (including leveling agents), dispersing agents, preservatives, anti-corrosion agents, anti-foaming agents, adhesion-imparting agents, and anti-static agents,.

No particular limitation is placed on the coating method of the aforementioned aqueous adhesive composition, and the aqueous adhesive may be coated on the silicone release layer by a method such as a comma coat method, lip coat method, reverse coat method, gravure coat method,. Moreover, the adhesive layer is formed by natural evaporation or heating-drying. The adhesive sheet or a similar releasing laminate may then be formed by stacking a sheet-like surface substrate of synthetic paper upon the formed adhesive layer.

The applied amount of the aqueous adhesive may be selected as desired. However, the silicone release layer of the present invention has excellent wettability with respect to the aqueous adhesive composition, and even when the aqueous adhesive composition is applied in a relatively thin manner, there is almost no partial splitting open of the adhesive layer and almost no exposure of the silicone release layer. In particular, application of the aqueous adhesive composition is possible such that the thickness at the time of coating (that is, when the moisture content is included in the aqueous adhesive composition) becomes less than or equal to 100 µm at the time of coating, and particularly preferably less than or equal to 75 µm at the time of coating.

The releasing laminate of the present invention is most preferably a releasing laminate that has an adhesive layer resulting from application of the (B1) emulsion type aqueous adhesive composition on the aforementioned silicone release layer such that a thickness upon coating becomes less than or equal to 100 µm.

The releasing laminate according to the present invention may be preferably produced by a method according to claim 3 Particularly, preferably, by further stacking a sheet-like surface substrate on the obtained adhesive layer, an adhesive sheet or a similar releasing laminate is formed.

The releasing laminate according to the present invention is extremely useful for adhesive labels and adhesive sheets used for adhesive seals attached to products or product containers. The releasing laminate or the method for producing the releasing laminate of the present invention is extremely useful for producing such adhesive labels and adhesive sheets.

### EXAMPLES

Hereinafter, the present invention is described in detail with reference to Practical Examples and Comparative Examples, but it should be understood that the present invention is not limited to these Practical Examples. The value of viscosity (kinetic viscosity) is measured at 25°C. Moreover, ppm is based on mass units and indicates the low-boiling components content. Within the tables, "D4-D10" indicates tetramer to decamer cyclic dimethylpolysiloxanes, and "D4-D20" indicates tetramer to eicosamer cyclic dimethylpolysiloxanes.

In the Practical Example and Comparative Example, the straight dimethylpolysiloxane described and utilized below was capped by a dimethylvinylsiloxy group at both molecular terminals (vinyl group content: 0.45% by mass, viscosity: 360 mPa·s, referred to hereinafter as the "vinyl-terminated dimethylpolysiloxane"). The vinyl-terminated dimethylpolysiloxane (a1) used in the Practical Example was produced by stripping to remove the tetra(4)mer to eicosa(20)mer cyclic dimethylpolysiloxanes from the raw material to the contents indicated in the table below.

**Table 1**

| Vinyl-terminated dimethylpolysiloxane | Materials with a low boiling point content (ppm) | |
|---|---|---|
| | D4-D10 | D4-D20 |
| used for Comparative Example | 1939.2 | 6936.7 |
| used for Practical Example (a1) | 6.2 | 119.5 |

[Practical Example and Comparative Example] 97.7 parts by mass of vinyl-terminated dimethylpolysiloxane, 2.0 parts by mass of methylhydrogenpolysiloxane capped at both molecular terminals with trimethylsiloxy groups (viscosity: 25 mP·s, silicon-bonded hydrogen atom content: 1.6% by mass), and 0.3 parts by mass of 1-ethyl-1-cyclohexanol were uniformly blended. Thereafter, chloroplatinic acid-1,3-divinyl-1,1,3,3-tetramethyldisiloxane complex (platinum metal content: 0.60% by mass) was added at an amount where the amount of platinum metal is 100 ppm and blended to obtain the solvent-free releasing cured film-forming organopolysiloxane composition of the Practical Example and Comparative Example.

A printing tester (model RI-2, manufactured by Mei Seisakusho Co., Ltd.) was used to apply the obtained organopolysiloxane composition at an amount where a thickness is 1.0 g/m² (siloxane basis) on the surface of polyethylene laminate paper. A cured film (silicone release layer) was formed by 30 seconds of heating at 140°C in a circulating hot air oven. On this cured film surface, an applicator was used to uniformly apply an acrylic resin emulsion adhesive (produced by Toyo Ink Manufacturing Co., Ltd., product name: ORIBAIN BPW-4792K) to a wet thickness of 50 µm or 100 µm at the time of coating (that is, thickness prior to the removal moisture). After the assembly was allowed to sit for 1 minute, the condition of the acrylic resin emulsion adhesive coating surface was evaluated by the below described criteria, and these results are listed in Table 2.
○: The acrylic resin emulsion adhesive wetted and spread completely uniformly.
Δ: Although just a few locations of heterogeneity were seen, the acrylic resin emulsion adhesive wetted and spread nearly uniformly.
×: The acrylic resin emulsion adhesive layer split open here and there, and a non-uniform coating surface was formed.

**Table 2**

| Vinyl-terminated dimethylpolysiloxane used in silicone release layer | State of the coating surface of acrylic resin emulsion adhesive | |
|---|---|---|
| | Coating thickness (wet thickness) 50 µm | Coating thickness (wet thickness) 100 µm |
| used for Comparative Example | × | Δ |
| used for Practical Example (a1) | Δ | ○ |

As shown in Table 2, a uniform coating surface could be obtained for both the 50 µm and 100 µm coating thicknesses (wet thicknesses) of the acrylic resin emulsion adhesive for the Practical Example in which the tetra(4)mer to eicosa(20)mer cyclic dimethylpolysiloxane was removed by stripping. In contrast, when the cyclic dimethylpolysiloxane of the Comparative Example was used that contained a large amount of vinyl-terminated dimethylpolysiloxane, uniformity of the coating surface was inferior to the Practical Example for both thicknesses. Here, uniformity of the adhesive layer obtained by removal of water by heating-drying depends on the state of the coating surface of the acrylic resin emulsion adhesive, and thus it was shown that a releasing laminate was obtained by the present invention that had a uniform and thin adhesive layer made from the aqueous adhesive on the silicone release layer.

## Claims

1. A releasing laminate comprising: a substrate; on the substrate, (A) a silicone release layer formed by curing a releasing cured film-forming organopolysiloxane composition comprising: (a) an organopolysiloxane having at least two silicon-bonded alkenyl groups in the molecule, and having a tetra(4)mer to deca(10)mer cyclic siloxane content of less than or equal to 20 ppm in terms of mass units, and having a tetra(4)mer to eicosa(20)mer cyclic siloxane content of less than or equal to 500 ppm in terms of mass units; (b) an organohydrogenpolysiloxane having at least two silicon-bonded hydrogen atoms in the molecule; and (c) a hydrosilylation reaction catalyst; and on the silicone release layer, (B) an adhesive layer comprising an aqueous adhesive composition; wherein the tetra(4)mer to eicosa(20)mer cyclic siloxane content of less than or equal to 500 ppm in terms of mass units improves wettability of the aqueous adhesive composition on the cured silicone release layer, such that a thin and uniform layer of adhesive is formed having a coating thickness less than or equal to 100µm.

2. The releasing laminate according to claim 1, wherein the substrate is a sheet-form substrate.

3. A method for producing a releasing laminate according to claim 1, comprising steps of: coating a releasing cured film-forming organopolysiloxane on a substrate, the releasing cured film-forming organopolysiloxane comprising: (a) an organopolysiloxane having at least two silicon-bonded alkenyl groups in the molecule, and a tetra(4)mer to deca(10)mer cyclic siloxane content of less than or equal to 20 ppm in terms of mass units, and having a tetra(4)mer to eicosa(20)mer cyclic siloxane content of less than or equal to 500 ppm in terms of mass units; (b) an organohydrogenpolysiloxane having at least two silicon-bonded hydrogen atoms in the molecule; and (c) a hydrosilylation reaction catalyst; curing the releasing cured film-forming organopolysiloxane to form a silicone release layer; and coating an aqueous adhesive composition such that the thickness upon coating becomes less than or equal to 100 µm on the silicone release layer.

## Patentansprüche

1. Ein Ablöselaminat, beinhaltend: ein Substrat; auf dem Substrat (A) eine Silicon-Ablöseschicht, gebildet durch das Härten einer ablösenden gehärteten filmbildenden Organopolysiloxan-Zusammensetzung, beinhaltend: (a) ein Organopolysiloxan, das mindestens zwei siliciumgebundene Alkenylgruppen in dem Molekül aufweist und einen Gehalt an tetra(4)merem bis deca(10)merem cyclischem Siloxan von weniger als oder gleich 20 ppm, bezogen auf Masseneinheiten, aufweist und einen Gehalt an tetra(4)merem bis eicosa(20)merem cyclischem Siloxan von weniger als oder gleich 500 ppm, bezogen auf Masseneinheiten, aufweist; (b) ein Organowasserstoffpolysiloxan, das mindestens zwei siliciumgebundene Wasserstoffatome in dem Molekül aufweist; und (c) einen Hydrosilylierungsreaktionskatalysator; und auf der Silicon-Ablöseschicht (B) eine Klebstoffschicht, die eine wässrige Klebstoffzusammensetzung beinhaltet; wobei der Gehalt an tetra(4)merem bis eicosa(20)merem cyclischem Siloxan von weniger als oder gleich 500 ppm, bezogen auf Masseneinheiten, die Benetzungsfähigkeit der wässrigen Klebstoffzusammensetzung auf der gehärteten Silicon-Ablöseschicht verbessert, sodass sich eine dünne und gleichmäßige Klebstoffschicht bildet, die eine Beschichtungsdicke von weniger als oder gleich 100 µm aufweist.

2. Ablöselaminat gemäß Anspruch 1, wobei das Substrat ein flächenförmiges Substrat ist.

3. Ein Verfahren zum Herstellen eines Ablöselaminats gemäß Anspruch 1, das die folgenden Schritte beinhaltet: Beschichten eines Substrats mit einem ablösenden gehärteten filmbildenden Organopolysiloxan, wobei das ablösende gehärtete filmbildende Organopolysiloxan Folgendes beinhaltet: (a) ein Organopolysiloxan, das mindestens zwei siliciumgebundene Alkenylgruppen in dem Molekül und einen Gehalt an tetra(4)merem bis deca(10)merem cyclischem Siloxan von weniger als oder gleich 20 ppm, bezogen auf Masseneinheiten, aufweist und einen Gehalt an tetra(4)merem bis eicosa(20)merem cyclischem Siloxan von weniger als oder gleich 500 ppm, bezogen auf Masseneinheiten, aufweist; (b) ein Organowasserstoffpolysiloxan, das mindestens zwei siliciumgebundene Wasserstoffatome in dem Molekül aufweist; und (c) einen Hydrosilylierungsreaktionskatalysator; Härten des ablösenden gehärteten filmbildenden Organopolysiloxans zum Bilden einer Silicon-Ablöseschicht; und Beschichten mit einer wässrigen Klebstoffzusammensetzung, sodass die Dicke beim Beschichten weniger als oder gleich 100 µm auf der Silicon-Ablöseschicht wird.

## Revendications

1. Un stratifié se décollant comprenant : un substrat ; sur le substrat, (A) une couche de décollement en silicone formée par durcissement d'une composition d'organopolysiloxane formant un film durci se décollant comprenant : (a) un organopolysiloxane ayant au moins deux groupes alcényle liés au silicium dans la molécule, et ayant une teneur en siloxane cyclique tétra(4)mère à déca(10)mère inférieure ou égale à 20 ppm en termes d'unités de masse, et ayant une teneur en siloxane cyclique tétra(4)mère à eicosa(20)mère inférieure ou égale à 500 ppm en termes d'unités de masse ; (b) un organohydrogénopolysiloxane ayant au moins deux atomes d'hydrogène liés au silicium dans la molécule ; et (c) un catalyseur de réaction d'hydrosilylation ; et sur la couche de décollement en silicone, (B) une couche d'adhésif comprenant une composition d'adhésif aqueux ; dans lequel la teneur en siloxane cyclique tétra(4)mère à eicosa(20)mère inférieure ou égale à 500 ppm en termes d'unités de masse améliore la mouillabilité de la composition d'adhésif aqueux sur la couche de décollement en silicone durcie, de telle sorte qu'une couche mince et uniforme d'adhésif est formée ayant une épaisseur de revêtement inférieure ou égale à 100 µm.

2. Le stratifié se décollant selon la revendication 1, dans lequel le substrat est un substrat en forme de feuille.

3. Un procédé pour la production d'un stratifié se décollant selon la revendication 1, comprenant des étapes de : revêtement d'un substrat avec un organopolysiloxane formant un film durci se décollant, l'organopolysiloxane formant un film durci se décollant comprenant : (a) un organopolysiloxane ayant au moins deux groupes alcényle liés au silicium dans la molécule, et une teneur en siloxane cyclique tétra(4)mère à déca(10)mère inférieure ou égale à 20 ppm en termes d'unités de masse, et ayant une teneur en siloxane cyclique tétra(4)mère à eicosa(20)mère inférieure ou égale à 500 ppm en termes d'unités de masse ; (b) un organohydrogénopolysiloxane ayant au moins deux atomes d'hydrogène liés au silicium dans la molécule ; et (c) un catalyseur de réaction d'hydrosilylation ; durcissement de l'organopolysiloxane formant un film durci se décollant afin de former une couche de décollement en silicone ; et revêtement de la couche de décollement en silicone avec une composition d'adhésif aqueux de telle sorte que l'épaisseur lors du revêtement devient inférieure ou égale à 100 µm.
